# EUROPEAN PATENT APPLICATION

(11) **EP 4 252 915 A1**
(43) Date of publication of application: **04.10.2023**
(21) Application number: 23166018.4
(22) Date of filing: 31.03.2023
(51) Int. Cl.: B05B 1/18, B05B 15/60, C02F 1/00, E03C 1/04, B01D 29/31

(54) **SHOWER FILTER ADAPTER SYSTEM**

(30) Priority: 01.04.2022 US 202263326655 P; 29.03.2023 US 202318128185
(71) Applicant: AS America, Inc., Piscataway, NJ 08854 (US)
(72) Inventor: LEAVITT, Douglas Fornell, East Brunswick, 08816 (US)
(74) Representative: Maiwald GmbH

(57) **Abstract**

A shower filter adapter system includes a housing forming an inner volume. The housing is configured to receive a filter in the inner volume. The housing includes a first distal end comprising threading configured to removably attach to two or more of a shower inlet structure, a shower manifold structure, a shower head support structure, or a shower head. The housing further includes a second distal end configured to connect to a flexible hose assembly.

## Description

### TECHNICAL FIELD

Embodiments of the present disclosure relate to adapter systems, and in particular to shower filter adapter systems.

### BACKGROUND

Some water supplied in buildings includes chemicals and contaminants. The chemicals and contaminants may be harmful to users and surfaces.

### BRIEF DESCRIPTION OF THE DRAWINGS

The present disclosure is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one.
FIGS. 1A-D illustrate shower filter adapter systems, according to certain embodiments.
FIGS. 2A-C illustrate cross-sectional views of shower filter adapter systems, according to certain embodiments.
FIGS. 3A-B illustrate shower filter adapter systems, according to certain embodiments.
FIGS. 4A-D illustrate plumbing fixture systems that include shower filter adapter systems, according to certain embodiments.

### DETAILED DESCRIPTION OF EMBODIMENTS

Embodiments described herein are related to shower filter adapter systems.

Plumbing fixture systems provide hot water, cold water, and/or a hot and cold water mixture from water sources (e.g., municipal water, well water, etc.). Some water supplied in buildings includes chemicals, additives, and/or contaminants that may be harmful to users, may damage surfaces, and may affect taste, smell, appearance, and safety of the water. Water sources (e.g., household water) may be sterilized with chlorine. Hot water spray (e.g., of a shower) converts dissolved chlorine to gas which may be inhaled and cause harm. Water sources may contain heavy metals (e.g., lead) and/or other contaminates (e.g., bacteria, algae, fungi, certain minerals, etc.) that may be harmful. Minerals (e.g., calcium, magnesium, iron, manganese, other metals, etc.) contribute to water "hardness" and may cause corrosion and scale formation on surfaces.

Conventional filters (e.g., for showers) are bulky and are limited as to where they can be installed based on physical size of the filters. Conventional filters are custom made for different applications and are difficult to install and remove, which involves disassembly of plumbing fixtures to access the filter. This causes conventional filters to have increased manufacturing processes, increased materials, increased time, increased installation errors, and the like.

The devices, systems, and methods of the present disclosure provide shower filter adapter systems.

A shower filter adapter system includes a housing forming an inner volume. In some embodiments, the housing is substantially cylindrical and at least a portion of the inner volume is substantially cylindrical.

The housing is configured to receive a filter in the inner volume. In some embodiments, the filter has a body that is substantially cylindrical and a distal portion that has a smaller diameter than the body of the filter (e.g., the distal portion is tapered).

The housing includes a first distal end (e.g., including threading) configured to removably attach to two or more of a shower inlet structure, a shower manifold structure, a shower head support structure, or a shower head. For example, the first distal end of the housing can be removed from a shower inlet structure and attached to a shower manifold structure, the shower head support structure, or a shower head.

The housing further includes a second distal end configured to connect (e.g., via a connector) to a flexible hose assembly. In some embodiments, a first hose end of the flexible hose assembly is connected to the second distal end of the housing and a second hose end of the flexible hose assembly is connected to a shower head.

The systems, devices, and methods of the present disclosure have advantages over conventional solutions. In some embodiments, the shower filter adapter system of the present disclosure is not as bulky and does not have the installation limitations compared to conventional filters. The shower filter adapter system of the present disclosure can be more easily installed and removed compared to conventional filters. In some embodiments, the shower filter adapter system of the present disclosure can be removed from one shower component and can be installed on a different type of shower component which allows shower filter adapter systems of the present disclosure to have decreased manufacturing processes, decreased materials, decreased time, decreased installation errors, etc. compared conventional filters. In some embodiments, the present disclosure allows installation of the shower filter adapter system in a system in multiple configurations compared to conventional solutions that have to be custom made for different solutions.

Although some embodiments of the present disclosure describe the use of the shower filter adapter system in a shower, in some embodiments, the shower filter adapter system can be used with different types of plumbing systems, such as bathtubs, sinks, faucets, mop sinks, utility sinks, kitchen sinks, and/or the like.

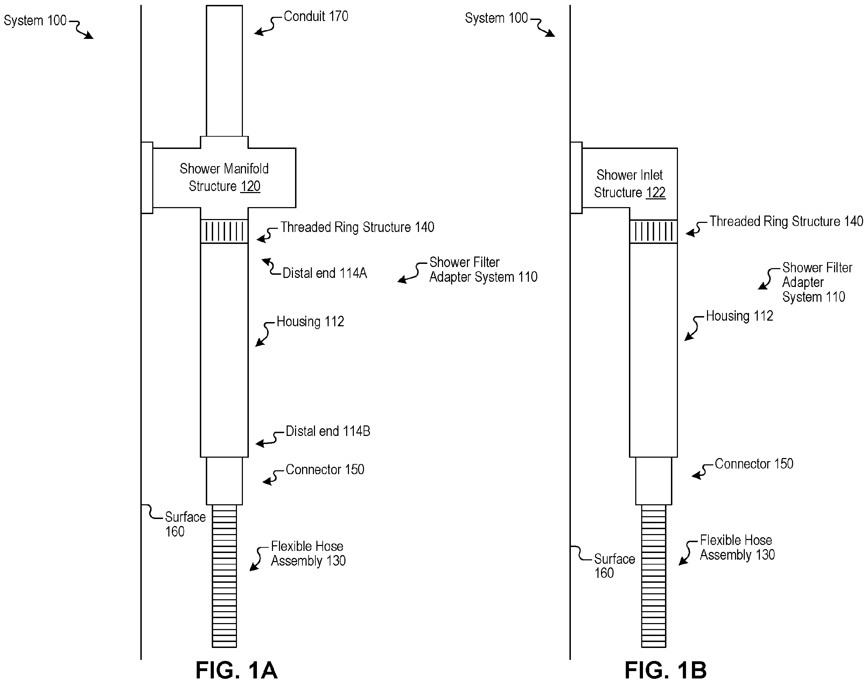

FIGS. 1A-D illustrate systems 100 (e.g., plumbing fixture systems, shower systems) including shower filter adapter systems 110, according to certain embodiments.

A system 100 may be a plumbing fixture system, a shower system, a bathtub-shower system, a walk-in shower system, a sink system, and/or the like.

Shower filter adapter system 110 (e.g., canister, in-line canister) includes a housing 112 that forms an inner volume. Housing 112 may be a substantially cylindrical housing and at least a portion of the inner volume may be substantially cylindrical. The housing 112 is configured to receive a filter in the inner volume. The filter may include a body that is substantially cylindrical (e.g., matches the portion of the inner volume of the housing 112 that is substantially cylindrical) and the filter may have a distal portion that has a smaller diameter (e.g., tapered portion) than the body of the filter.

The housing 112 may have one or more inner surfaces configured to receive the distal portion of the filter and one or more second inner surfaces configured to receive the body of the filter. The housing 112 may have a greater inner width at the one or more second inner surfaces than at the one or more first inner surfaces. The body of the filter may be substantially cylindrical and the one or more second inner surfaces may be a substantially cylindrical inner surface.

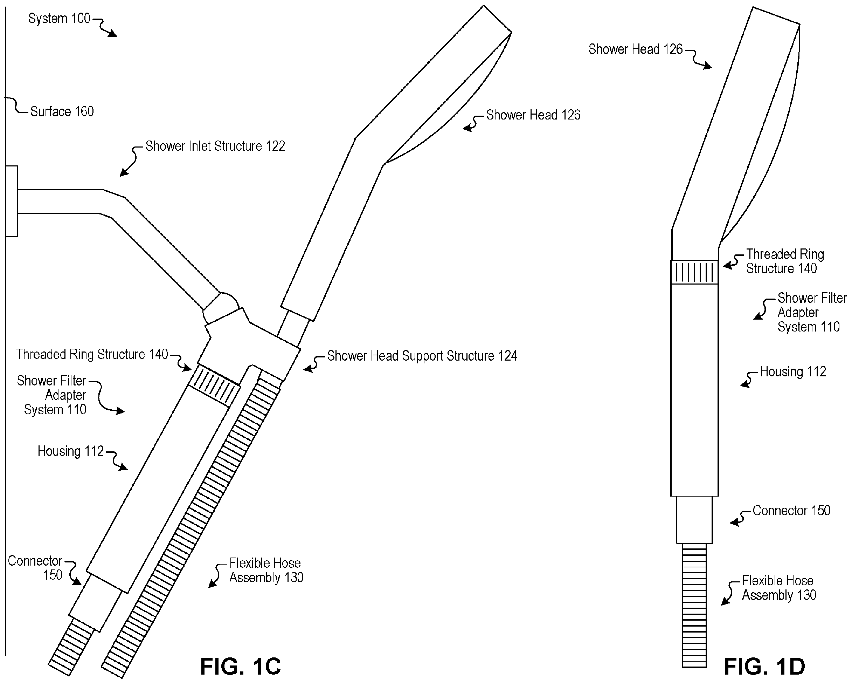

The housing 112 includes a distal end 114A and a distal end 114B. Distal end 114A may include threading. Distal end 114A is configured to removably attach to two or more of a shower manifold structure 120 (e.g., FIG. 1A), a shower inlet structure 122 (e.g., FIG. 1B), a shower head support structure 124 (e.g., FIG. 1C), or a shower head 126 (e.g., FIG. 1D). The distal end 114B is configured to connect to a flexible hose assembly 130. Shower filter adapter system 110 may be used to attach a filter to a shower head 126 or to have an inline canister.

The distal end 114A of the housing 112 may be configured to removably attach via a threaded ring structure 140 to one or more (e.g., two or more) shower components (e.g., shower manifold structure 120, shower inlet structure 122, shower head support structure 124, or shower head 126). In some embodiments, the threaded ring structure 140 is rotatably secured to the shower component (e.g., shower manifold structure 120, shower inlet structure 122, shower head support structure 124, or shower head 126) and the distal end 114A of housing 112 rotates into the threaded ring structure 140. In some embodiments, the threaded ring structure 140 is rotatably secured to the distal end 114A of housing 112 and the shower component (e.g., shower manifold structure 120, shower inlet structure 122, shower head support structure 124, or shower head 126) rotates into the threaded ring structure 140. The threaded ring structure 140 may be rotated onto a component (e.g., distal end 114A or shower component) via a quarter turn. The threaded ring structure 140 may provide a quarter turn access to a filter (e.g., filter cartridge).

In some embodiments, the shower filter adapter system 110 is configured to secure the filter proximate one or more check valves disposed in a shower component (e.g., shower head 126). Liquid flow may flow from the shower filter adapter system 110 and then through the one or more check valves. The one or more check valves may prevent liquid flow from the shower component (e.g., shower head 126) into the shower filter adapter system 110.

A first hose end of the flexible hose assembly 180 may be configured to connect to the distal end 114B of the housing 112 (e.g., see FIGS. 1A-B) and a second hose end may be configured to connect to the shower head (e.g., see FIG. 1C).

In some embodiments, distal end 114B of housing 112 forms inner threading configured to connect to the flexible hose assembly 130. In some embodiments, distal end 114B of housing 112 forms inner threading configured to connect to a connector 150 that connects to flexible hose assembly 130. In some embodiments, distal end 114B of housing 112 forms inner threading configured to connect to a first portion of connector 150 (e.g., first outer threading of connector 150) and the flexible hose assembly 130 forms inner threading configured to connect to a second portion of connector 150 (e.g., second outer threading of connector 150).

In some embodiments, the shower manifold structure 120 or shower inlet structure 122 is configured to attach to a surface 160. In some embodiments, surface 160 is a substantially vertical surface. In some embodiments, surface 160 is a wall (e.g., bathroom wall, shower wall, shower enclosure wall, etc.).

Referring to FIG. 1A, liquid flow is from a water source (e.g., through a shower mixing valve) to a shower manifold structure 120 and from the shower manifold structure 120 to conduit 170 and/or shower filter adapter system 110. Conduit 170 may be disposed between shower manifold structure 120 and a first shower head (e.g., fixed shower head). Shower filter adapter system 110 may be disposed between shower manifold structure 120 and a second shower head (e.g., hand-wash shower head, moveable shower head). In some embodiments, responsive to user input via a valve, shower manifold structure 120 provides liquid flow to the first shower head and/or the second shower head. In some embodiments, a filter disposed in shower filter adapter system 110 filters the liquid flowing from shower manifold structure 120 to a second shower head via the shower filter adapter system 110 and the flexible hose assembly 130.

Referring to FIG. 1B, liquid flow is from a water source (e.g., through a shower mixing valve) to shower inlet structure 122 and from shower inlet structure 122 to shower filter adapter system 110. Shower filter adapter system 110 may be disposed between shower manifold structure 120 and a shower head (e.g., hand-wash shower head, moveable shower head). In some embodiments, responsive to user input via a valve, shower inlet structure 122 provides liquid flow to the shower head. In some embodiments, a filter disposed in shower filter adapter system 110 filters the liquid flowing from shower inlet structure 122 to the shower head via the shower filter adapter system 110 and the flexible hose assembly 130.

Referring to FIG. 1C, liquid flow is from a water source (e.g., through a shower mixing valve) to a shower inlet structure 122, through shower head support structure 124, through shower filter adapter system 110, through flexible hose assembly 130, and then out through shower head 126. Shower filter adapter system 110 may be disposed between shower head support structure 124 and flexible hose assembly 130. In some embodiments, responsive to user input via a valve, shower inlet structure 122 provides liquid flow to the shower head 126. In some embodiments, a filter disposed in shower filter adapter system 110 filters the liquid flowing from shower inlet structure 122 to the shower head 126 via the shower filter adapter system 110 and the flexible hose assembly 130.

Referring to FIG. 1D, liquid flow is from a water source (e.g., through a shower mixing valve) to a shower head 126. In some embodiments, liquid flow is through a shower manifold structure 120 (e.g., see FIG. 1A) or a shower inlet structure 122 (e.g., see FIG. 1B or FIG. 1C) to the shower head 126. In some embodiments, responsive to user input via a valve, liquid flow is provided to the shower head 126. In some embodiments, a filter disposed in shower filter adapter system 110 filters the liquid flowing to the shower head 126 via the shower filter adapter system 110 and the flexible hose assembly 130. In some embodiments, shower filter adapter system 110 is used as a shower head wand.

Shower filter adapter system 110 may be removed from any of the systems 100 shown in FIGS. 1A-D and then removably attached to a different system 100 of FIGS 1A-D. In some embodiments, the shower filter adapter system 110 can be removably attached to a different system not shown in FIGS. 1A-D.

In some embodiments, flexible hose assembly 130 is removably attached to shower filter adapter system 110. In some embodiments, the shower filter adapter system 110 includes the flexible hose assembly 130 (e.g., the flexible hose assembly 130 is not removable from the shower filter adapter system 110).

In some embodiments, each of the systems 100 includes a threaded ring structure 140. In some embodiments, one or more of the systems 100 does not include a threaded ring structure 140.

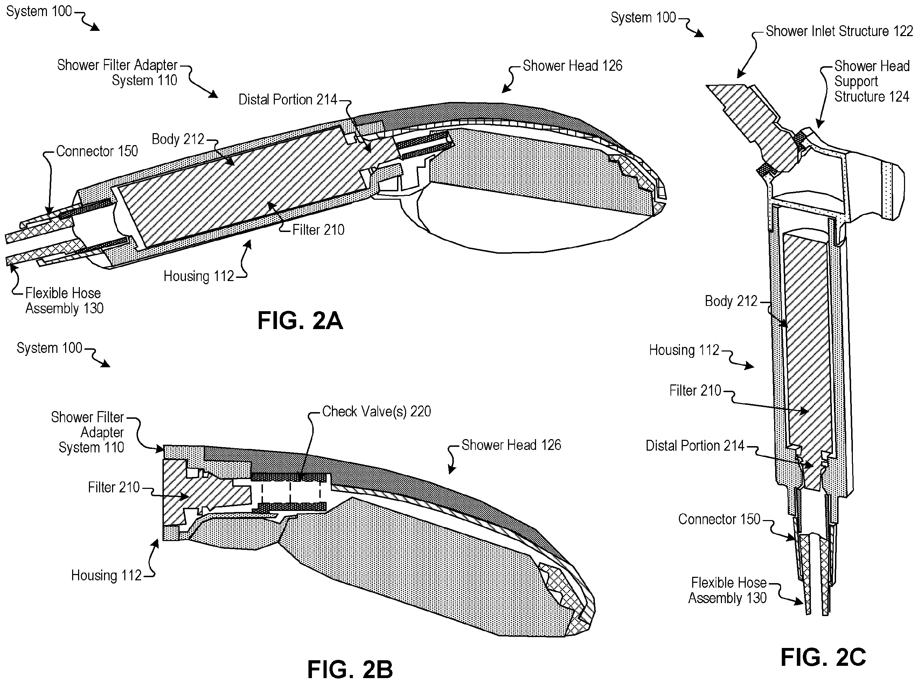

FIGS. 2A-C illustrate cross-sectional views of systems 100 including shower filter adapter systems 110, according to certain embodiments. Features of FIGS. 2A-C that have similar reference numbers as one or more features of FIGS. 1A-D may have the same or similar structure and/or functionality as one or more of the features of FIGS. 1A-D.

Shower filter adapter system 110 may include a housing 112 that forms an inner volume. A filter 210 may be disposed in the inner housing of housing 112. The filter may have a body 212 and a distal portion 214. The body 212 may be substantially cylindrical and the distal portion 214 may have a width (e.g., diameter) that is less than that of the body 212. The distal portion 214 may be tapered.

Referring to FIG. 2B, one or more check valves 220 may be disposed proximate the distal portion 214 of filter 210. In some embodiments, the one or more check valves 220 are disposed in the shower head 126. In some embodiments, the one or more check valves 220 are disposed in the shower filter adapter system 110.

In some embodiments, the distal portion 214 (e.g., tapered portion, smaller width portion) of the filter is proximate the shower component (e.g., shower head 126, opposite the flexible hose assembly 130). In some embodiments, the distal portion 214 (e.g., tapered portion, smaller width portion) of the filter is proximate the flexible hose assembly 130 (e.g., opposite the shower component, such as the shower head 126).

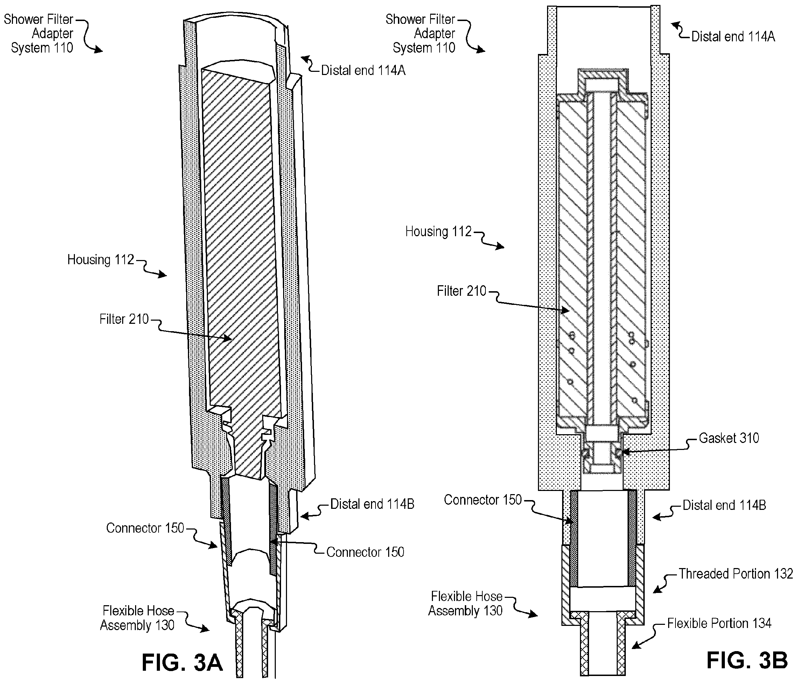

FIGS. 3A-B illustrate shower filter adapter systems 110, according to certain embodiments. Features of FIGS. 3A-B that have similar reference numbers as one or more features of FIGS. 1A-2C may have the same or similar structure and/or functionality as one or more of the features of FIGS. 1A-2C.

Distal end 114A may have a threaded outer surface configured to interface (e.g., thread into) a shower component that has a threaded inner surface.

Distal end 114B may have a threaded inner surface configured to interface (e.g., thread with) a portion of connector 150 that has a threaded outer surface. Flexible hose assembly 130 may include a threaded inner surface configured to interface (e.g., thread with) a portion of connector 150 that has a threaded outer surface.

Flexible hose assembly 130 may include a threaded portion 132 that has a threaded inner surface and a flexible portion 134 that flexes (e.g., to move the shower head.).

In some embodiments, shower filter adapter system 110 can be reversibly attached and removed from a shower component (e.g., shower manifold structure 120, shower inlet structure 122, shower head support structure 124, or shower head 126), for instance via engagement at distal end 114A, to remove and recycle and/or to re-charge filter media of filter 210.

In some embodiments, one or more portions of housing 112 and filter 210 are coupled via one or more gaskets (e.g., O-rings). For example, coupling of the inner surface of the housing 112 to filter 210 may be formed via an outlet O-ring and/or inlet O-ring positioned in corresponding grooves formed by housing 112 (e.g., proximate distal portion of filter 210).

Upon actuation of a valve, a shower component (e.g., shower manifold structure 120, shower inlet structure 122, shower head support structure 124, or shower head 126) may receive source water and may direct source water through filter 210.

Filter 210 may include a gasket 310 (e.g., O-ring). Gasket 310 is configured to form a seal between filter 210 and housing 112 of shower filter adapter system 110. In some embodiments, filter 210 is inserted into housing 112 with a compression spring present under filter 210. Responsive to a shower component engaging with (e.g., threading onto) distal end 114A of housing 112, a portion of the shower component may push filter 210 to compress gasket 310 (e.g., to seal filter 210 against housing 112). In some embodiments, filter 210 does not have a seal (e.g., there are close tolerances between housing 112 and filter 210).

In some embodiments, shower filter adapter system 110 receives gasket 310 of filter 210 which forms a seal in the shower filter adapter system 110. A compression spring may be compressed as filter 210 is inserted into housing 112 and aids in removing a spent filter 210 from housing 112.

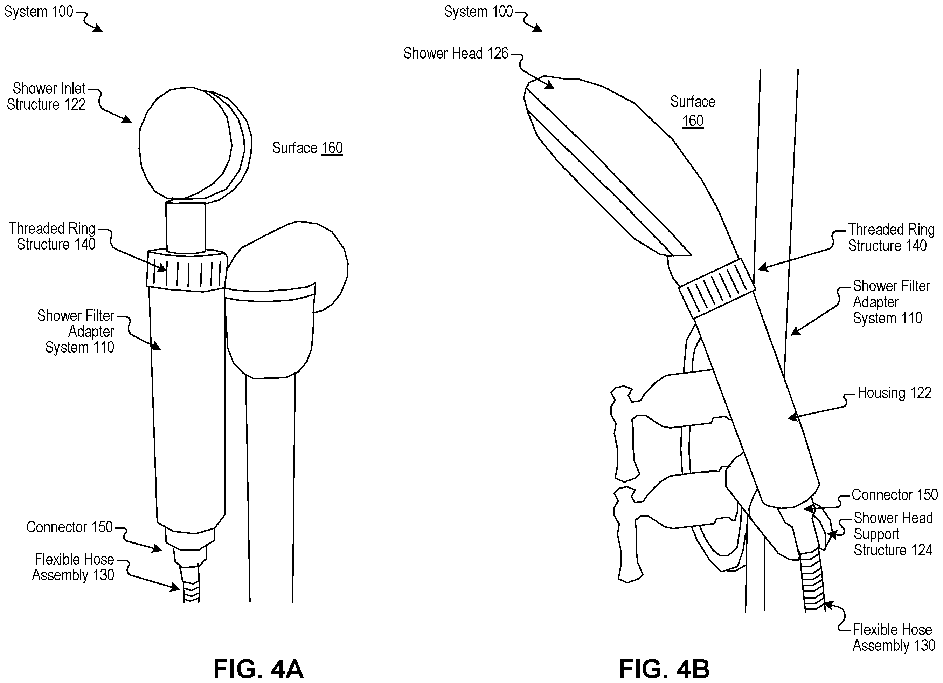

FIGS. 4A-D illustrate systems 100 (e.g., plumbing fixture systems, shower systems) that include shower filter adapter systems 110, according to certain embodiments.

Referring to FIG. 4A, a system 100 includes a shower inlet structure 122 disposed on surface 160 to receive liquid flow from a water source (e.g., shower mixing valve). A shower filter adapter system 110 is fluidly coupled (e.g., attached) to the shower inlet structure 122. A flexible hose assembly 130 is fluidly coupled (e.g., attached, integral) to the shower filter adapter system 110.

Referring to FIG. 4B, a system 100 includes a shower filter adapter system 110 fluidly coupled (e.g., attached) to a shower head 126. A flexible hose assembly 130 is fluidly coupled (e.g., attached, integral) to the shower filter adapter system 110. A connector 150 may be disposed between the flexible hose assembly 130 and housing 112 of shower filter adapter system 110. The connector 150 may be supported by a shower head support structure 124.

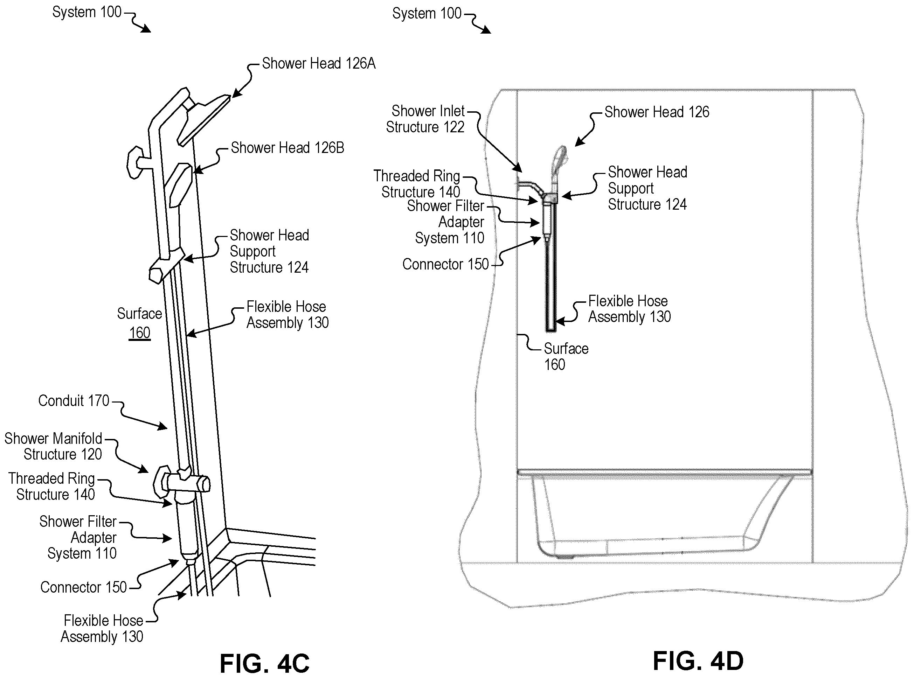

Referring to FIG. 4C, a system 100 includes a shower manifold structure 120 disposed on surface 160 to receive liquid flow from a water source (e.g., shower mixing valve). The shower manifold structure 120 may be configured to provide liquid flow from the water source to the conduit 170 and/or to shower filter adapter system 110. Conduit 110 may be coupled (e.g., attached, connected) to shower head 126A. The shower filter adapter system 110 may be coupled (e.g., fluidly coupled, connected, etc.) to shower head 126B via flexible hose assembly 130. Shower head support structure 124 may support shower head 126B.

In some embodiments, shower head 126B is a hand shower configured to dispense filtered shower water. The hand shower may include a spray head containing a plurality of spray models to emit shower water. Shower head 126B is coupled to and in fluid communication with flexible hose assembly 130 and is shown docked to an adjustable height adapter (e.g., shower head support structure 124. Source water is provided through shower manifold structure 120 (e.g., water inlet), is passed through a filter (e.g., filter assembly including filter cartridge and/or filter cap) disposed in shower filter adapter system 110, and filtered water is delivered to shower head 126B via flexible hose assembly 130. Flexible

The filter may be removably disposed in a cylinder-shaped bore of shower filter adapter system 110 (e.g., via threaded engagement between threaded ring structure 140 and shower filter adapter system 110). No parts of system 100 need be manipulated to install and remove filter, except for shower filter adapter system 110.

In some embodiments, system 100 of FIG. 4C includes a shower assembly that includes a shower head 126A and shower head 126B (e.g., hand shower). In some embodiments, a diverter (e.g., directly coupled to shower manifold structure 120) is positioned downstream of and in fluid communication with shower manifold structure 120. Diverter may direct water to shower head 126A and/or shower head 126B.

Referring to FIG. 4D, a system 100 includes a shower inlet structure 122 disposed on surface 160 to receive liquid flow from a water source (e.g., shower mixing valve). A shower head support structure 124 is connected to shower inlet structure 122 and shower filter adapter system 110. Shower filter adapter system 110 is connected to a shower head 126 via flexible hose assembly 130.

In some embodiments, system 100 includes a shower assembly configured to receive a shower filter adapter system 110), where a filter may installed and removed without disassembling any shower assembly parts (e.g., except for turning shower filter adapter system 110 to engage with or disengage from a shower component). A filter may simply be installed and removed from a shower filter adapter system 110 which is part of the shower assembly or part of an add-on assembly. In some embodiments, the filter may be a single filter cartridge that is employed for the various configurations disclosed, for example where a filter cartridge/filter assembly is disposed in a shower filter adapter system 110 fluidly coupled to a shower bar (e.g., conduit), a shower head, an add-on unit, a diverter unit, an in-wall valve assembly, etc. In some embodiments, a shower filter adapter system 110 may be directly coupled to a diverter, where the diverter is configured to direct filtered water to a shower head and/or a hand shower.

In certain embodiments, shower filter adapter system 110 may be positioned along a shower bar (e.g., conduit 170). In some embodiments, a filter disposed in shower filter adapter system 110 is configured to deliver filtered water to a hand shower (e.g., shower head 126). A shower bar may be in fluid communication with source water and a hand shower via a filter disposed in shower filter adapter system 110.

A shower head 126 may be a fixed shower head or a hand shower removably coupled to a cradle (shower head support structure 124). A shower head 126 includes nozzles (or spray nozzles) to deliver shower water or shower spray. Accordingly, a hand shower is also a shower head 126. In some embodiments, a shower head 126 (e.g., shower head 126A) is a "fixed" shower head (e.g., a shower head that may not be removed from a certain position but that can be locally adjusted).

In some embodiments, a shower filter adapter system 110 may be part of an add-on assembly. An add-on assembly may be permanently coupled to a shower assembly and in fluid communication with a water source and a shower head 126. An add-on assembly may receive source water and provide filtered water. In some embodiments, an add-on assembly may be coupled to a cradle to hold a hand shower. In some embodiments, a shower filter adapter system 110 may be coupled to a diverter unit, where the diverter unit is configured to selectively direct filtered water flow from a shower filter adapter system 110 to one or both of a shower head 126A or a shower head 126B (e.g., hand shower). The shower head 126A may be removably coupled to the diverter unit. The shower head 126B (e.g., hand shower) is fluidly coupled to the diverter unit via a flexible hose assembly 130 (e.g., hose) and may be removably attachable to the diverter unit. In some embodiments, a shower head 126B (e.g., hand shower) may be removably docked to the diverter unit via magnetic attraction. Shower assemblies containing a removably docked hand shower (e.g., shower head 126B) to a diverter unit may be termed "2-in-1" shower assemblies. Some 2-in-1 shower assemblies are described for example in US2018/0193851, incorporated herein by reference.

The shower manifold structure 120 may form a bore configured to receive a filter (e.g., water filter assembly or water filter cartridge). In some embodiments, a water filter cartridge may be substantially cylinder-shaped, and likewise a manifold bore may be correspondingly substantially cylinder shaped. In some embodiments, a water filter cartridge may have an end containing both an inlet an outlet. A manifold bore may have an inlet and an outlet positioned towards an inner end thereof. In some embodiments, installation of a filter assembly or filter cartridge in a bore formed by a shower filter adapter system 110 includes coupling of a filter cartridge inlet to an inlet of the shower filter adapter system 110 and coupling of a filter cartridge outlet to an outlet of the shower filter adapter system 110.

A water filter assembly/cartridge may be removably installed in a shower filter adapter system 110. Removable installation or insertion of a shower filter adapter system 110 may be accomplished via threaded engagement/disengagement, via a quarter turn/removal, via a compression spring mechanism, via a simple "plug-type" insertion/removal, and the like.

In some embodiments, a filter (e.g., water filter assembly) may include a filter cartridge. In some embodiments, a shower filter adapter system 110 may include one or more features to removably attach to a shower component, such as threading or "snap-on" features. In some embodiments, a shower filter adapter system 110 may include a radial extension to couple to a snap-on feature of a shower component. In some embodiments, a shower filter adapter system 110 may include a threaded portion for threadingly engaging to and disengaging from a shower component. In some embodiments, a shower filter adapter system 110 may include a "stop" feature to ensure proper installation of a filter and proper alignment of the shower filter adapter system 110.

In some embodiments, a filter (e.g., filter assembly) may include an O-ring about an inlet radial extension and an O-ring about an outlet radial extension. The O-rings may form a seal with an inlet and outlet of shower filter adapter system 110 upon installation of the filter. A filter may include grooves configured to receive O-rings.

In some embodiments, a filter (e.g., filter cartridge) and a corresponding bore of the shower filter adapter system 110 may be non-annular and/or non-cylinder shaped. In some embodiments, a filter may be tapered (e.g., have a shape of a tapered bottle stopper). In some embodiments, a filter (e.g., filter cartridge) may have a non- annular shape, for example a rectangle, square, elliptical, or other shape.

In some embodiments, a water filter inlet and outlet may be coplanar. A water filter inlet and outlet may each be annular. A water filter inlet and outlet may be concentric, with one encircling the other.

In some embodiments, filter 210 (e.g., filter cartridge) has a length of about 100-140 millimeters (mm), of about 110-130 mm, of about 120-130 mm, of about 120-125 mm, of about 124 mm, and/or the like. In some embodiments, a filter 210 (e.g., filter cartridge) has a diameter of about 10-50 mm, of about 20-40 mm, of about 25-35 mm, of about 28 mm, and/or the like. In some embodiments, a filter cartridge diameter does not include any radially protruding features.

In some embodiments, a bore of the shower filter adapter system 110 may include a diameter of from any of about 41 mm, about 42 mm, about 43 mm, about 44 mm or about 45 mm, to any of about 46 mm, about 47 mm, about 48 mm, about 49 mm, about 50 mm, about 51 mm, about 52 mm, about 53 mm, about 54 mm, about 55 mm, about 56 mm, about 57 mm, about 58 mm, about 59 mm or about 60 mm, about 61 mm, or more. For a non-annular or non-cylindrical shape, a diameter may be considered as a longest measure. In some embodiments, a bore diameter of shower filter adapter system 110 may be from about 2 mm, about 3 mm, or about 4 mm, to any of about 5 mm, about 6 mm, or about 7 mm, or more larger than a filter cartridge diameter.

In some embodiments, a bore of shower filter adapter system 110 may include a depth of from any of about 40 mm, about 41 mm, about 42 mm, about 43 mm, about 44 mm or about 45 mm, to any of about 46 mm, about 47 mm, about 48 mm, about 49 mm, about 50 mm, about 51 mm, about 52 mm, about 53 mm, about 54 mm, about 55 mm, about 56 mm, about 57 mm, about 58 mm, about 59 mm or about 60 mm, or more.

In some embodiments, the filter may include an inner bore including a filter media M1 and an outer bore including a filter media M2. In some embodiments, source water (unfiltered water) is directed to a shower filter adapter system 110 in a first flow direction. The shower filter adapter system 110 directs the source water to the filter in a second flow direction and through filter media M1 towards an outer end of the filter cartridge. The shower filter adapter system 110 may receive filtered water in a third flow direction through media M2. The shower filter adapter system 110 may then direct filtered water out and to a shower head 126.

A filter cartridge inner bore may be substantially axially positioned along a central core. A filter cartridge outer bore may be concentric with an inner bore and encircle the inner bore.

In some embodiments a filter cartridge includes a continuous wall defined by a first continuous end and a second end, where the second end includes a water filter inlet and outlet. In some embodiments, a filter cartridge is substantially cylinder-shaped, wherein a water inlet and outlet are positioned at a second end of the cylinder shape, and the remainder of the shape is continuous.

In some embodiments, a first end of a water filter cartridge may include an open space in fluid communication with an inner bore and an outer bore of the cartridge. Fluid may flow through the inner bore including media M1 and into the open space near the cartridge first end, and from the first end open space through the outer bore including media M2 and out of the filter. In some embodiments, the configuration may be reversed.

In some embodiments, filter media include one or more of hollow carbon, carbon block, activated carbon, redox media, or polyphosphate beads. Redox media includes kinetic degradation fluxion (KDF) media.

In some embodiments, filter includes one type of media (e.g., M1). In some embodiments, filter includes at least two types of media(e.g., M1 and M2). Media M1 and M2 may be the same or different. For example, M1 may include hollow carbon and M2 may include KDF. In other embodiments M1 may include KDF and M2 may include hollow carbon. In still other embodiments, both M1 and M2 may include KDF. Each of M1 and M2 may be a uniform single media or a mixture of media. A media mixture may include discrete sequences of different media, homogeneous mixtures, or graded mixtures. In some embodiments, a filter assembly may include one or more features to indicate a remaining useful life of the filter media. In some embodiments, an indicator may be an LED (light emitting diode) light that activates when the filter cartridge requires changing. In other embodiments, a visible indicator strip may change color, for example colorless to red, upon reaching a filter end-of-life. In some embodiments, an LCD (liquid crystal display) may provide a color array of light to dark to indicate a filter requires changing. In still other embodiments, a time-based chemical indicator may change from clear or light-colored to a visible color or dark to indicate the filter needs to be changed. Each of these embodiments may be provided for example within a window on a filter cap.

The above description is intended to be illustrative, and not restrictive. Although the present disclosure has been described with references to specific illustrative examples and implementations, it will be recognized that the present disclosure is not limited to the examples and implementations described. The scope of the disclosure should be determined with reference to the following claims, along with the full scope of equivalents to which the claims are entitled.

The preceding description sets forth numerous specific details such as examples of specific systems, components, methods, and so forth in order to provide a good understanding of several embodiments of the present disclosure. It will be apparent to one skilled in the art, however, that at least some embodiments of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular implementations may vary from these exemplary details and still be contemplated to be within the scope of the present disclosure.

The terms "over," "under," "between," "disposed on," and "on" as used herein refer to a relative position of one material layer or component with respect to other layers or components. For example, one layer disposed on, over, or under another layer may be directly in contact with the other layer or may have one or more intervening layers. Moreover, one layer disposed between two layers may be directly in contact with the two layers or may have one or more intervening layers. Similarly, unless explicitly stated otherwise, one feature disposed between two features may be in direct contact with the adjacent features or may have one or more intervening layers.

The words "example" or "exemplary" are used herein to mean serving as an example, instance or illustration. Any aspect or design described herein as "example' or "exemplary" is not necessarily to be construed as preferred or advantageous over other aspects or designs. Rather, use of the words "example" or "exemplary" is intended to present concepts in a concrete fashion.

Reference throughout this specification to "one embodiment," "an embodiment," or "some embodiments" means that a particular feature, structure, or characteristic described in connection with the embodiment is included in at least one embodiment. Thus, the appearances of the phrase "in one embodiment," "in an embodiment," or "in some embodiments" in various places throughout this specification are not necessarily all referring to the same embodiment. In addition, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Also, the terms "first," "second," "third," "fourth," etc. as used herein are meant as labels to distinguish among different elements and can not necessarily have an ordinal meaning according to their numerical designation. When the term "about," "substantially," or "approximately" is used herein, this is intended to mean that the nominal value presented is precise within ± 10%.

Although the operations of the methods herein are shown and described in a particular order, the order of operations of each method may be altered so that certain operations may be performed in an inverse order so that certain operations may be performed, at least in part, concurrently with other operations. In another embodiment, instructions or sub-operations of distinct operations may be in an intermittent and/or alternating manner.

Following are some non-limiting embodiments of the disclosure.

In a first embodiment, disclosed is a shower filter adapter system comprising: a housing forming an inner volume, wherein the housing is configured to receive a filter in the inner volume, the housing comprising: a first distal end comprising threading configured to removably attach to two or more of a shower inlet structure, a shower manifold structure, a shower head support structure, or a shower head; and a second distal end configured to connect to a flexible hose assembly.

In a second embodiment, disclosed is a shower filter adapter system according to embodiment 1, wherein the housing further comprises: one or more first inner surfaces configured to receive a distal end of the filter; and one or more second inner surfaces configured to receive a body of the filter.

In a third embodiment, disclosed is a shower filter adapter system according to embodiment 2, wherein the housing has a greater inner width at the one or more second inner surfaces than at the one or more first inner surfaces.

In a fourth embodiment, disclosed is a shower filter adapter system according to any of the embodiments 2-3, wherein the body of the filter is substantially cylindrical and the one or more second inner surfaces is a substantially cylindrical inner surface.

In a fifth embodiment, disclosed is a shower filter adapter system according to any of the preceding embodiments, wherein the first distal end of the housing is configured to removably attach via a threaded ring to the two or more of the shower inlet structure, the shower manifold structure, the shower head support structure, or the shower head.

In a sixth embodiment, disclosed is a shower filter adapter system according to any of the preceding embodiments, wherein a distal end of the filter is configured to be proximate one or more check valves disposed in the shower head.

In a seventh embodiment, disclosed is a shower filter adapter system according to any of the preceding embodiments, wherein a first hose end of the flexible hose assembly is configured to connect to the second distal end of the housing and a second hose end of the flexible hose assembly is configured to connect to the shower head.

In an eighth embodiment, disclosed is a shower system comprising: a cylindrical housing configured to receive a substantially cylindrical filter in an inner volume formed by the cylindrical housing, the cylindrical housing comprising a first distal end configured to removably attach to two or more of a shower inlet structure, a shower manifold structure, a shower head support structure, or a shower head; and a flexible hose assembly configured to connect to a second distal end of the cylindrical housing.

In a ninth embodiment, disclosed is a shower system according to embodiment 8, wherein the cylindrical housing further comprises: a first cylindrical inner surface configured to receive a distal end of the substantially cylindrical filter; and a second inner surface configured to receive a body of the substantially cylindrical filter.

In a tenth embodiment, disclosed is a shower system according to embodiment 9, wherein the cylindrical housing has a greater inner width at the second inner surface than at the first cylindrical inner surface.

In an eleventh embodiment, disclosed is a shower system according to any of the preceding embodiments, wherein the first distal end of the cylindrical housing is configured to removably attach via a threaded ring to the two or more of the shower inlet structure, the shower manifold structure, the shower head support structure, or the shower head.

In a twelfth embodiment, disclosed is a shower system according to any of the preceding embodiments, wherein a distal end of the substantially cylindrical filter is configured to be proximate one or more check valves disposed in the shower head.

In a thirteenth embodiment, disclosed is a shower system according to any of the preceding embodiments, wherein a first hose end of the flexible hose assembly is configured to connect to the second distal end of the cylindrical housing and a second hose end of the flexible hose assembly is configured to connect to the shower head.

In a fourteenth embodiment, disclosed is a shower system according to any of the preceding embodiments, wherein the second distal end of the cylindrical housing forms inner threading configured to connect to the flexible hose assembly.

In a fifteenth embodiment, disclosed is a shower system comprising: a housing forming an inner volume, wherein the housing is configured to receive a filter in the inner volume, the housing comprising a first distal end configured to removably attach to two or more of a shower inlet structure, a shower manifold structure, a shower head support structure, or a shower head; a flexible hose assembly configured to fluidly couple to the housing; and a connector configured to connect a second distal end of the housing to the flexible hose assembly.

In a sixteenth embodiment, disclosed is a shower system according to embodiment 15, wherein the second distal end of the housing forms first inner threading configured to connect to first outer threading of the connector.

In a seventeenth embodiment, disclosed is a shower system according to embodiment 16, wherein the flexible hose assembly forms second inner threading configured to connect to second outer threading of the connector.

In a eighteenth embodiment, disclosed is a shower system according to any of the preceding embodiments, wherein the housing further comprises: one or more first inner surfaces configured to receive a distal end of the filter; and one or more second inner surfaces configured to receive a body of the filter.

In a nineteenth embodiment, disclosed is a shower system according to embodiment 18, wherein the housing has a greater inner width at the one or more second inner surfaces than at the one or more first inner surfaces.

In a twentieth embodiment, disclosed is a shower system according to any of embodiments 18-19, wherein the body of the filter is substantially cylindrical and the one or more second inner surfaces is a substantially cylindrical inner surface.

Although the foregoing description is directed to embodiments of the present disclosure, it is noted that other variations and modifications will be apparent to those skilled in the art, and may be made without departing from the spirit or scope of the present disclosure. Moreover, features described in connection with one embodiment of the present disclosure may be used in conjunction with other embodiments, even if not explicitly stated above.

The term "adjacent" may mean "near" or "close-by" or "next to."

The term "coupled" means that an element is "attached to" or "associated with" another element. Coupled may mean directly coupled or coupled through one or more other elements. An element may be coupled to an element through two or more other elements in a sequential manner or a non-sequential manner. The term "via" in reference to "via an element" may mean "through" or "by" an element. Coupled or "associated with" may also mean elements not directly or indirectly attached, but that they "go together" in that one may function together with the other.

The term "flow communication" means for example configured for liquid or gas flow there through and may be synonymous with "fluidly coupled." The terms "upstream" and "downstream" indicate a direction of gas or liquid flow, that is, gas or fluid will flow from upstream to downstream.

When elements are configured to receive from or configured to deliver or provide to another element, or when elements are coupled to other elements regarding fluid flow, the elements are in fluid communication with each other.

The term "towards" in reference to a of point of attachment, may mean at exactly that location or point or, alternatively, may mean closer to that point than to another distinct point, for example "towards a center" means closer to a center than to an edge.

The term "like" means similar and not necessarily exactly like. For instance "ring-like" means generally shaped like a ring, but not necessarily perfectly circular.

The articles "a" and "an" herein refer to one or to more than one (e.g., at least one) of the grammatical object. Any ranges cited herein are inclusive. The term "about" used throughout is used to describe and account for small fluctuations. For instance, "about" may mean the numeric value may be modified by ±0.05%, ±0.1%, ±0.2%, ±0.3%, ±0.4%, ±0.5%, ±1%, ±2%, ±3%, ±4%, ±5%, ±6%, ±7%, ±8%, ±9%, ±10% or more. All numeric values are modified by the term "about" whether or not explicitly indicated. Numeric values modified by the term "about" include the specific identified value. For example "about 5.0" includes 5.0.

The term "substantially" is similar to "about" in that the defined term may vary from for example by ±0.05%, ±0.1%, ±0.2%, ±0.3%, ±0.4%, ±0.5%, ±1%, ±2%, ±3%, ±4%, ±5%, ±6%, ±7%, ±8%, ±9%, ±10% or more of the definition; for example the term "substantially perpendicular" may mean the 90° perpendicular angle may mean "about 90°". The term "generally" may be equivalentto "substantially."

Features described in connection with one embodiment of the disclosure may be used in conjunction with other embodiments, even if not explicitly stated.

Embodiments of the disclosure include any and all parts and/or portions of the embodiments, claims, description and figures. Embodiments of the disclosure also include any and all combinations and/or sub-combinations of embodiments.

It is understood that the above description is intended to be illustrative, and not restrictive. Many other embodiments will be apparent to those of skill in the art upon reading and understanding the above description. The scope of the disclosure should, therefore, be determined with reference to the appended claims, along with the full scope of equivalents to which such claims are entitled.

All U.S. patent applications, published patent applications and patents referred to herein are hereby incorporated by reference.

## Claims

1. A shower filter adapter system comprising:
a housing forming an inner volume, wherein the housing is configured to receive a filter in the inner volume, the housing comprising:
a first distal end comprising threading configured to removably attach to two or more of a shower inlet structure, a shower manifold structure, a shower head support structure, or a shower head; and
a second distal end configured to connect to a flexible hose assembly.

2. The shower filter adapter system of claim 1, wherein the housing further comprises:
one or more first inner surfaces configured to receive a distal end of the filter; and
one or more second inner surfaces configured to receive a body of the filter.

3. The shower filter adapter system of claim 2, wherein the housing has a greater inner width at the one or more second inner surfaces than at the one or more first inner surfaces.

4. The shower filter adapter system of claim 2, wherein the body of the filter is substantially cylindrical and the one or more second inner surfaces is a substantially cylindrical inner surface.

5. The shower filter adapter system of claim 1, wherein the first distal end of the housing is configured to removably attach via a threaded ring to the two or more of the shower inlet structure, the shower manifold structure, the shower head support structure, or the shower head.

6. The shower filter adapter system of claim 1, wherein a distal end of the filter is configured to be proximate one or more check valves disposed in the shower head.

7. The shower filter adapter system of claim 1, wherein a first hose end of the flexible hose assembly is configured to connect to the second distal end of the housing and a second hose end of the flexible hose assembly is configured to connect to the shower head.

8. A shower system comprising:
a cylindrical housing configured to receive a substantially cylindrical filter in an inner volume formed by the cylindrical housing, the cylindrical housing comprising a first distal end configured to removably attach to two or more of a shower inlet structure, a shower manifold structure, a shower head support structure, or a shower head; and
a flexible hose assembly configured to connect to a second distal end of the cylindrical housing.

9. The shower system of claim 8, wherein the cylindrical housing further comprises:
a first cylindrical inner surface configured to receive a distal end of the substantially cylindrical filter; and
a second inner surface configured to receive a body of the substantially cylindrical filter, wherein the cylindrical housing has a greater inner width at the second inner surface than at the first cylindrical inner surface.

10. The shower system of claim 8, wherein the first distal end of the cylindrical housing is configured to removably attach via a threaded ring to the two or more of the shower inlet structure, the shower manifold structure, the shower head support structure, or the shower head.

11. The shower system of claim 8, wherein a distal end of the substantially cylindrical filter is configured to be proximate one or more check valves disposed in the shower head.

12. The shower system of claim 8, wherein as least one of:
a first hose end of the flexible hose assembly is configured to connect to the second distal end of the cylindrical housing and a second hose end of the flexible hose assembly is configured to connect to the shower head; or
the second distal end of the cylindrical housing forms inner threading configured to connect to the flexible hose assembly.

13. A shower system comprising:
a housing forming an inner volume, wherein the housing is configured to receive a filter in the inner volume, the housing comprising a first distal end configured to removably attach to two or more of a shower inlet structure, a shower manifold structure, a shower head support structure, or a shower head;
a flexible hose assembly configured to fluidly couple to the housing; and
a connector configured to connect a second distal end of the housing to the flexible hose assembly.

14. The shower system of claim 13, wherein the second distal end of the housing forms first inner threading configured to connect to first outer threading of the connector, and wherein the flexible hose assembly forms second inner threading configured to connect to second outer threading of the connector.

15. The shower system of claim 13, wherein the housing further comprises:
one or more first inner surfaces configured to receive a distal end of the filter; and
one or more second inner surfaces configured to receive a body of the filter, wherein at least one of:
the housing has a greater inner width at the one or more second inner surfaces than at the one or more first inner surfaces; or
the body of the filter is substantially cylindrical and the one or more second inner surfaces is a substantially cylindrical inner surface.
